(19) Europäisches Patentamt

European Patent Office

Office européen des brevets

(11) **EP 4 695 176 B1**

(12) **EUROPÄISCHE PATENTSCHRIFT**

(45) Veröffentlichungstag und Bekanntmachung des Hinweises auf die Patenterteilung:
**05.08.2026 Patentblatt 2026/32**

(21) Anmeldenummer: **25734594.2**

(22) Anmeldetag: **16.06.2025**

(51) Internationale Patentklassifikation (IPC):
*B65G 1/04* (2006.01)      *B07C 5/00* (2006.01)
*B65G 1/137* (2006.01)      *B65G 47/46* (2006.01)

(52) Gemeinsame Patentklassifikation (CPC):
**B65G 1/1378; B07C 5/00; B65G 1/0457; B65G 1/1371; B65G 47/46;** B65G 2201/0229

(86) Internationale Anmeldenummer:
**PCT/EP2025/066700**

(87) Internationale Veröffentlichungsnummer:
**WO 2026/002695 (02.01.2026 Gazette 2026/01)**

(54) **SORTIERVERFAHREN FÜR MATRIX-SORTIERER**

SORTING METHOD FOR MATRIX SORTER

PROCÉDÉ DE TRI POUR TRIEURS MATRICIELS

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **25.06.2024 EP 24184190**

(43) Veröffentlichungstag der Anmeldung:
**18.02.2026 Patentblatt 2026/08**

(73) Patentinhaber: **Dürkopp Fördertechnik GmbH
33719 Bielefeld (DE)**

(72) Erfinder:
• **MEIER, Dirk
32756 Detmold (DE)**
• **SIEKSMEIER, Dirk
32139 Spenge (DE)**

(74) Vertreter: **Zenz Patentanwälte Partnerschaft mbB
Gutenbergstraße 39
45128 Essen (DE)**

(56) Entgegenhaltungen:
EP-A1- 3 666 690      US-A1- 2002 053 535
US-A1- 2019 039 834

EP 4 695 176 B1

**Beschreibung**

Die vorliegende Erfindung betrifft ein Sortierverfahren für geförderte Stückgüter. Insbesondere betrifft die Erfindung ein Verfahren zur Sortierung von Stückgütern, welche entlang von räumlich vorgegebenen Förderbahnen geführt und gefördert werden.

Fördersysteme mit entsprechenden Förderbahnen sind in verschiedenen Gestaltungen bekannt, beispielsweise als Systeme zur Hängeförderung von Stückgütern. In Hängefördersystemen werden die Stückgüter hängend an Transportschienen entlang Förderbahnen gefördert oder in Taschen oder hängende Aufnahmen eingelegt und zusammen mit diesen entlang der Transportschienen gefördert. Bei anderen Fördersystemen werden Stückgüter liegend auf Förderbändern oder Rollen entlang von Förderbahnen gefördert.

Ein Hängefördersystem entsprechender Art ist beispielsweise in der DE 10 2018 209 266 A1 offenbart. Das dort beschriebene Hängefördersystem erlaubt ein auftragsorientiertes Bereitstellen von Stückgütern an einem Packplatz. Die Einführung eines Parkbereichs zur Zwischenpufferung der Einzelwaren eines Folgeauftrags verhindert eine Vermischung der Waren unterschiedlicher Aufträge am Packplatz. Die Vorrichtung umfasst mehrere Förderbahnen, die durch Zuführ- und Abgabeöffnungen begrenzt sind. Mittels automatisierter Entladestellen und Trennelementen wird eine gezielte Sortierung und Zuweisung der Einzelwaren zu verschiedenen Aufträgen ermöglicht.

Um eine bedarfsgerechte Förderung von Stückgütern zu ermöglichen, werden in bahnbasierten Fördersystemen auch Sortiereinrichtungen realisiert. Aufgrund der seriellen Förderung entlang der Förderbahnen müssen die Stückgüter dazu über Weichen oder Trenn-Einrichtungen geführt werden, damit die Reihenfolge der Stückgüter verändert werden kann.

In dem Dokument EP 3 630 655 A1 wird ein Fördersystem beschrieben, in dem eine Sortierstufe nach einer Pufferzone angeordnet ist. Diese arrangiert die Waren in der gewünschten Reihenfolge für einen Kommissionierarbeitsplatz. Als besonders leistungsfähige Sortiereinrichtungen für derartige Fördersysteme haben sich "Matrix-Sortierer" etabliert. Die Matrix-Sortierung ermöglicht es, im Batch kommissionierte Teile in eine exakte Stück-für-Stück-Reihenfolge zu bringen.

Im Rahmen des Sortierverfahrens werden vor der eigentlichen Sortierung die Kriterien für die Sortierung definiert. Dabei wird jedem geförderten Stückgut ein Sortierwert (Schlüssel) zugeordnet. Die Ordnung der Sortierwerte der Stückgüter gibt die gewünschte Reihenfolge der Stückgüter nach der Sortierung vor. Im Anschluss an die Förderung der Stückgüter entlang einer gemeinsamen Zulaufbahn erfolgt die Sortierung durch eine Mehrzahl von Sortierstufen. In jeder Sortierstufe wird jedes Stückgut auf jeweils eine von einer Mehrzahl alternativer (paralleler) Sortierbahnen gefördert. Nach Abschluss der Förderung der zu sortierenden Stückgüter auf die Sortierbahnen erfolgt eine Zusammenführung der Stückgüter nach jeder Sortierstufe von den Sortierbahnen auf eine nachgeordnete gemeinsame Sammelbahn. Die Zuordnung der Stückgüter zu einer der alternativen Sortierbahnen erfolgt in jeder Sortierstufe durch Auswertung des Sortierwerts jedes Stückguts mittels eines Sortieralgorithmus. Die Förderung jedes Stückguts auf die jeweilige Sortierbahn wird dann in Abhängigkeit von der Auswertung des Sortieralgorithmus über Weichen gesteuert. Nach Durchlaufen aller Sortierstufen werden die sortierten Stückgüter hintereinander auf eine gemeinsame Ausgabebahn gefördert.

Matrix-Sortierer werden häufig mit drei Sortierstufen mit jeweils sechs Sortierbahnen ausgeführt. Dies ist insbesondere auf eine praktische und ökonomische Abwägung von Systemkosten, Bauraum für die Sortieranlage und Anzahl der zu sortierenden Stückgüter zurückzuführen. Bezüglich der Funktion der Matrix-Sortierer gibt es jedoch keine grundsätzliche Begrenzung hinsichtlich der Anzahl der Sortierstufen und deren jeweiligen Sortierbahnen.

Matrix-Sortierer verwenden in den meisten Fällen zur Sortierung einen Radix-Sortieralgorithmus. Der Radix-Sortieralgorithmus ist ein Sortierverfahren, welches Zahlen in mehreren Sortierstufen nach verschiedenen Stellen (oder Radices) sortiert. Dabei erfolgt die Sortierung typischerweise von der am wenigsten signifikanten bis zur am meisten signifikanten Stelle. Da dieser Algorithmus allgemein gut bekannt und dokumentiert ist, wird an dieser Stelle nicht auf dessen konkrete Funktionsweise eingegangen. Außerdem ist die vorliegende Erfindung nicht auf die Anwendung eines konkreten Algorithmus beschränkt, auch wenn der Radix-Algorithmus einen sehr geeigneten und bevorzugten Algorithmus zur Umsetzung der Erfindung darstellt. In dieser Anmeldung wird der Begriff "Radix-Sortieralgorithmus" verwendet, wobei alle Implementierungen und ggf. auch Abwandlungen dieses Sortieralgorithmus umfasst sind.

Matrix-Sortierer zielen stets auf eine effiziente Förderung und Sortierung ab. Dies impliziert die bestmögliche Auslastung der Fördersysteme sowie die Optimierung der Fördergeschwindigkeit. Ausfälle durch Überlastung oder Stauungen sind zu vermeiden. Da es sich bei Matrix-Sortierern um physische Konstruktionen handelt, die Platz erfordern, besteht der Wunsch, die Matrix-Sortierer bedarfsgerecht zu konzipieren. Andererseits ist stets die begrenzte Kapazität der Sortierbahnen zu berücksichtigen, auf denen die Stückgüter zur Sortierung gepuffert werden. Dabei sind sowohl die Länge der Sortierbahnen als auch die Abmessungen der geförderten Stückgüter bestimmende Parameter. Bei einer Förderung von Stückgütern mit variablen Abmessungen, beispielsweise bei einem Hängeförderer, kann es bei einer Zunahme der Abmessung der Stückgüter in Förderrichtung zu einer Reduzierung der Kapazität einzelner Sortierbahnen in einzelnen Sortierstationen kommen. Die Kapazität einzelner Sortierbahnen kann in einzelnen Sortierstufen soweit herabgesetzt sein, dass eine Sortierung aufgrund des physischen Platzbedarfes nicht mehr möglich ist. Dies ist der Fall, wenn die Länge der Sortierbahn geringer ist als die Summe der Abmessungen der in die Sortierbahn einzubringenden Stückgüter. Um eine derartige Problematik zu vermeiden, orientiert sich die Auslegung von Sortierbahnen häufig an den größten noch zu verarbeitenden Abmessungen der Stückgüter, was mit einem entsprechenden Platzbedarf und Kostenaufwand verbunden ist. Dies ist auch dann der Fall, wenn diese Abmessungen nur äußerst selten prozessiert werden.

Die Druckschrift US 2002/053535 A1 offenbart ein Sortierverfahren gemäß dem Oberbegriff des Anspruchs 1 für Objekte mit mehreren Sortierläufen zwischen zwei Blöcken von Parkbereichen. Das bekannte Verfahren beschreibt eine mathematische Kapazitätsberechnung und strebt eine gleichmäßige Befüllung der Parkbereiche an. Die bekannte Lösung stellt einen reaktiven Ansatz zur Kapazitätssteuerung dar, bei welchem die Systemparameter an die verfügbare Kapazität angepasst werden.

Die Druckschrift EP 3 666 690 A1 beschreibt ein Kommissionierverfahren für Einzelartikel in Hängeförderanlagen mit einem Auftragszwischenspeicher und zeitintervall-basierter Auftragsabwicklung. Das bekannte System berücksichtigt die Sortierleistung und maximal zulässige Anzahl von Transporttaschen pro Auftragsliste zur Gewährleistung eines störungsfreien Ablaufs.

Das Dokument US 2019/039834 A1 offenbart einen Matrix-Sortierer mit mehreren Sortierstufen und Sortierlinien zur Sortierung verschiedener Objektgrößen in platzbegrenzten Umgebungen. Das bekannte System berücksichtigt die maximale Verlängerung und Anzahl von Objekten pro Sortierlinie für die Hardware-Dimensionierung und adressiert Kapazitätsprobleme durch mechanische Skalierung mittels zusätzlicher Sortierstufen und -linien.

Aus dem Stand der Technik bekannte Ansätze zur Optimierung von Sortiersystemen weisen einen reaktiven Charakter auf. Der Nachteil dieser reaktiven Systeme liegt darin, dass sie die Kapazitätsbegrenzung als nachgelagerte Kontrollfunktion implementieren.

Die vorliegende Erfindung zielt darauf ab, Matrix-Sortierer in einer effizienteren Weise zu betreiben.

Die zuvor beschriebene Aufgabe wird durch ein Verfahren mit den Merkmalen des Patentanspruchs 1 gelöst.

Die Lösung der Erfindung besteht in einer Verbesserung der Steuerung des Matrix-Sortierers, ohne dass eine bauliche Modifikation desselben erforderlich ist. Dies wird erreicht, indem zu Beginn eines Sortiervorgangs, also vor der Förderung der Stückgüter in die erste Sortierstufe des Matrix-Sortierers, die Sortierwerte (Schlüssel) für die Stückgüter in erfindungsgemäßer Weise bestimmt werden. Eine prädiktive Optimierung der Sortierwerte sorgt erfindungsgemäß für eine gleichmäßige Auslastung der Sortierbahnen in allen Sortierstufen, ohne bauliche Modifikationen am Matrix-Sortierer zu erfordern. Erfindungsgemäß wird die deterministische Berechenbarkeit der Stückgutverteilung in Matrix-Sortierern genutzt.

Die Sortierwerte werden erfindungsgemäß in Abhängigkeit von der Anzahl der zu sortierenden Stückgüter und in Abhängigkeit von dem Sortieralgorithmus bestimmt. Die erfindungsgemäße Auswahl der Sortierwerte gewährleistet, dass in jeder der Sortierstufen und für alle Sortierbahnen die maximale Anzahl von Stückgütern auf jeder Sortierbahn einer vorgegebenen Obergrenze entspricht und/oder die minimale Anzahl von Stückgütern auf jeder Sortierbahn einer vorgegebenen Untergrenze entspricht. Im Unterschied zu den bekannten reaktiven, auftragsbasierten und hardware-orientierten Ansätzen stellt die vorliegende Erfindung ein proaktives, algorithmisches Optimierungsverfahren bereit, welches durch systematische Berechnung oder Auswahl spezifisch optimierter Sortierwerte eine gleichmäßige Auslastung aller Sortierbahnen in allen Sortierstufen eines Matrix-Sortierers gewährleistet. Ein wesentliches Merkmal der vorliegenden Erfindung liegt in der systematischen Entkopplung von Zielposition und Sortierwert bei gleichzeitiger Erhaltung der gewünschten Sortierreihenfolge. Während bekannte Verfahren die Sortierwerte als direkte, sequenzielle Abbildung der gewünschten Zielreihenfolge verwenden (z.B. Sortierwerte 1, 2, 3, ..., n für n Stückgüter), bilden die erfindungsgemäßen Sortierwerte eine mathematisch optimierte, von der sequenziellen Zielposition abweichende, aber ordnungserhaltende Zahlenfolge. Unter einer "ordnungserhaltenden Zahlenfolge" ist zu verstehen, dass die Ordnungsrelation zwischen den Sortierwerten der Ordnungsrelation zwischen den gewünschten Zielpositionen der Stückgüter entspricht. Mathematisch ausgedrückt: Wenn Stückgut A in der gewünschten Sortierreihenfolge vor Stückgut B stehen soll, dann muss der dem Stückgut A zugeordnete Sortierwert kleiner sein als der dem Stückgut B zugeordnete Sortierwert.

Die Sortierwerte legen die Reihenfolge der Stückgüter nach der Sortierung fest, also deren Zielposition in der vom Matrix-Sortierer ausgangsseitig geförderten sequenziellen Reihenfolge der Stückgüter. Die gewünschte Zielposition ergibt sich durch die Zielvorgaben der Sortierung, so kann zum Beispiel die Zielposition bestimmte Eigenschaften der Stückgüter berücksichtigen (z.B. die Postleitzahl oder ein dem Stückgut zugeordneter Versanddienstleister oder ein zugeordneter Packplatz). Ist zu jedem Stückgut eine Zielposition in der Sortierung definiert, erfolgt ausgehend von der Ordnung der Zielpositionen eine erfindungsgemäße Zuordnung der Sortierwerte zu den Stückgütern. In aufsteigender Reihenfolge der Werte der Zielpositionen werden auch aufsteigende Werte der erfindungsgemäß bestimmten Sortierwerte zu den Stückgütern zugeordnet. Sollen die Stückgüter z.B. nach Postleitzahlen sortiert werden, so kann z.B. dem Stückgut mit der kleinsten Postleitzahl der kleinste Sortierwert zugeordnet werden, dem Stückgut mit der nachfolgenden (z.B. größeren oder identischen) Postleitzahl wird der zweitkleinste Sortierwert zugeordnet usw. bis zum Stückgut mit der größten Postleitzahl, welchem der größte Sortierwert zugeordnet wird.

Die erfindungsgemäße Wirkung wird durch die Verwendung von Sortierwerten mit spezifischen Eigenschaften erzielt. Die Sortierwerte entstammen einer Menge von Sortierwerten, deren Verwendung im Sortieralgorithmus für die Erfüllung der genannten Kriterien der maximalen und/oder minimalen Auslastung der Sortierbahnen sorgt. Dies resultiert in einer optimierten Förderung der Stückgüter durch den Matrix-Sortierer, wie im Folgenden beschrieben wird. Eine optimierte Förderung gemäß der Erfindung beinhaltet eine verbesserte Auslastung der Sortierbahnen des Matrix-Sortierers, da die Verwendung aller Sortierbahnen in einem vorbestimmten Maße sichergestellt wird. Eine Über- bzw. Unterbelegung einzelner Sortierbahnen wird somit vermieden. Die erfindungsgemäße Lösung basiert auf der Erkenntnis, dass die Verteilung von Stückgütern auf die Sortierbahnen bei deterministischen Sortieralgorithmen mathematisch berechenbar und daher präventiv optimierbar ist. Anstatt auf nachgelagerte Kapazitätskontrolle oder Hardware-Expansion zu setzen, erfolgt eine proaktive Steuerung der Stückgutverteilung bereits vor Beginn des Sortiervorgangs durch die Verwendung mathematisch optimierter Sortierwerte.

Während erfindungsgemäß zu jedem Stückgut ein Sortierwert bestimmt wird, erfolgt die nachfolgende Ordnung der Sortierwerte gemäß dem unveränderten Algorithmus und gemäß dessen üblicher Betriebsweise. Der erfindungsgemäße Unterschied gegenüber dem Stand der Technik liegt also in der Steuerung des Matrix-Sortierers ohne funktionale Veränderung des Algorithmus.

Die Erfindung basiert auf der Berechenbarkeit der Verteilung von Stückgütern mit bekannten Sortierwerten auf die Sortierbahnen aller Sortierstufen. Die Förderwege entlang der Stufen des Matrix-Sortierers sind bei Kenntnis des Algorithmus nämlich determiniert und berechenbar. Die Erfindung macht sich diese Berechenbarkeit der Förderung entlang der Sortierbahnen aller Sortierstufen zunutze, um bei Nutzung eines vorgegebenen Sortier-Algorithmus die Sortierwerte so auszuwählen, dass die genannten Bedingungen hinsichtlich der Auslastung der Sortierbahnen in allen Stufen erfüllt werden. Zum Beispiel ermöglicht es eine geeignete Auswahl der Sortierwerte, eine Gleichverteilung der Stückgüter über die Sortierbahnen sämtlicher Sortierstufen zu erreichen. Unter einer Gleichverteilung ist hier zu verstehen, dass die Verteilung einer völligen Gleichverteilung bestmöglich angenähert wird, wobei Abweichungen in Stückzahlen von +1/-1 über die Sortierbahnen möglich sind. Eine perfekte Gleichverteilung kann jedoch bei einer Anzahl von Stückgütern, die kein Vielfaches der Anzahl von parallelen Sortierbahnen einer Sortierstufe ist, nicht erreicht werden, so dass dort die genannten Abweichungen als optimale Gleichverteilung akzeptiert werden.

Die Sortierwerte können im Rahmen der Erfindung den Stückgütern zusätzlich zu sonstigen im Steuersystem des Fördersystems dem Stückgut zugeordneten Kennungen, auch temporär zugewiesen werden. So kann zum Beispiel allein für den Durchlauf durch den Matrix-Sortierer für jedes Stückgut der Sortierwert vergeben werden, wobei eine Zuordnung zwischen dem Sortierwert und den weiteren Identifikationsinformationen des Stückgutes für die Durchführung der Sortierung gespeichert wird. Der Sortierwert kann dann nach vollständigem Durchlauf durch den Matrix-Sortierer wieder verworfen werden.

Die Bestimmung der Sortierwerte ist im Rahmen der Erfindung in vielfältiger Weise möglich. Je nach Sortier-Algorithmus und je nach Ausführungsform der Erfindung können die Sortierwerte durch Rechenvorschriften für jede Anzahl von Stückgütern diskret bestimmt werden. Dieser Ansatz bietet sich an, wenn der Sortier-Algorithmus die Ableitung solcher Rechenvorschriften in einfacher Weise erlaubt, wie unten mit dem Radix-Sortieralgorithmus veranschaulicht wird.

Es besteht alternativ auch die Möglichkeit, Simulationen für Gruppen von Sortierwerten durchzuführen, also für systematisch oder zufällig ausgewählte Sortierwerte eine Sortierung in einem Matrix-Sortierer mit der vorgesehenen Anzahl an Sortierstufen und Sortierbahnen zu simulieren. In Abhängigkeit von den Ergebnissen der Simulation werden solche Gruppen von Sortierwerten ausgewählt, welche in der Simulation die gewünschten Verteilungen auf allen Sortierstufen realisieren. Ein solcher umfassender Simulations-Ansatz ist universell für jede Art von Algorithmus geeignet, da er keine Analyse des Algorithmus an sich erfordert, sondern die Auswahl der Sortierwerte ausschließlich auf Grundlage der Ausgaben des Algorithmus erfolgt. Für eine umfassende Simulation sind allerdings ggf. zeitaufwendige Berechnungen erforderlich. Daher ist es im Rahmen der Erfindung möglich und sinnvoll, derartige Berechnungen einmalig durchzuführen und die ermittelten Gruppen von Sortierwerten in Zuordnung zu der Anzahl von Gruppenelementen zu speichern, um später im Betrieb des Verfahrens ohne weitere Simulationsprozesse darauf zurückzugreifen. Es kann durch Simulation entsprechend ein vollständiges Datenwerk in Tabellenform erstellt werden, welches zu einer gegebenen Anzahl von zu sortierenden Stückgütern eine geeignete Menge von Sortierwerten zur Durchführung des erfindungsgemäßen Verfahrens zuordnet. Je nach gewähltem Verfahren ist also die Nutzung von gespeicherten Sortierwerten oder auch die Live-Berechnung im Zuge der Ausführung der Zuordnung der Sortierwerte bei Zuführung der Stückgüter in den Matrix-Sortierer möglich. Wesentlich ist die Zusammensetzung der Menge von Sortierwerten, nicht der Zeitpunkt der Erzeugung. Entsprechend wird bei jedem Sortierdurchlauf (Sortier-Batch) in Abhängigkeit von der Anzahl der Stückgüter in dem Sortierdurchlauf, eine Gruppe von Sortierwerten den Stückgütern entsprechend deren Zielpositionen einzeln zugeordnet, was in einer Optimierung die Förderwege durch den Matrix-Sortierer bezüglich einer gewünschten Auslastung der Sortierbahnen resultiert. So können die herkömmlichen Matrix-Sortierer und deren Steuerungen unverändert genutzt werden, wenn allein die erfindungsgemäße Zuordnung der Sortierwerte sichergestellt wird.

Die erfindungsgemäße Lösung ermöglicht somit eine deterministische Optimierung der Sortierbahn-Auslastung ohne Modifikation der Hardware-Konfiguration. Durch die erfindungsgemäße Sortierwert-Generierung und Zuordnung zu Stückgütern wird die vorhandene Sortierkapazität optimiert ausgenutzt, wodurch sowohl Überlastungen einzelner Sortierbahnen als auch Unterauslastungen des Gesamtsystems vermieden werden. Dies führt zu einer signifikanten Steigerung der Durchsatzkapazität und Betriebsstabilität bestehender Matrix-Sortierer. Die technischen Vorteile der erfindungsgemäßen Lösung führen zu einer Verbesserung der Systemleistung: Während reaktive Ansätze gemäß dem Stand der Technik auf Kapazitätsprobleme erst nach deren Auftreten reagieren können, verhindert die erfindungsgemäße präventive Optimierung das Entstehen ungleichmäßiger Verteilungen von vornherein. Gegenüber auftragsbasierten Systemen ermöglicht die mikroskopische Einzelstück-Optimierung eine wesentlich präzisere Kontrolle der Auslastung. Im Vergleich zu hardware-orientierten Lösungen wird eine Kapazitätssteigerung ohne zusätzlichen Platzbedarf oder mechanische Komponenten erreicht.

Die erfindungsgemäße Verwendung spezifisch berechneter oder ausgewählter Sortierwerte stellt somit einen kostengünstigen und effizienten Ansatz dar, da sie erstmals eine systematische, präventive und software-basierte Optimierung der Matrix-Sortierer-Leistung ermöglicht.

In einer bevorzugten Ausführungsform der Erfindung wird die Obergrenze der Stückgüter auf jeder Sortierbahn so bestimmt, dass sie dem aufgerundeten ganzzahligen Wert entspricht, der sich aus einer Division der Anzahl der zu sortierenden Stückgüter durch die Anzahl der Sortierbahnen einer Sortierstufe ergibt. Alternativ oder zusätzlich wird die Untergrenze bestimmt, so dass sie dem abgerundeten ganzzahligen Wert entspricht, der sich aus einer Division der Anzahl der zu sortierenden Stückgüter durch die Anzahl der Sortierbahnen ergibt.

Diese Grenzen stellen eine möglichst gleichmäßige Verteilung der Stückgüter sicher und minimieren das Risiko von Überfüllungen von Sortierbahnen und von ungenutzten Kapazitäten auf anderen Sortierbahnen.

Es ist besonders bevorzugt, dass ein Matrix-Sortierer in dem Verfahren verwendet wird, bei welchem die Anzahl der Sortierbahnen in allen Sortierstufen identisch ist.

Diese Einheitlichkeit vereinfacht den mechanischen Aufbau und die Steuerungslogik des Sortiersystems, was sowohl die Implementierung als auch die Wartung erleichtert und auch die Auslastung über sämtliche Sortierstufen optimiert.

Als Sortieralgorithmus wird in einer bevorzugten Ausführung der Erfindung ein Radix-Sortieralgorithmus verwendet.

Die Verwendung dieses Algorithmus ist in Matrix-Sortierern bewährt und robust implementiert. Außerdem erlaubt es die Funktionsweise des Algorithmus, die Gruppen von Sortierwerten in Abhängigkeit von der Anzahl der zu sortierenden Stückgüter durch einfach zu implementierende Programme schnell zu berechnen, wie unten erläutert wird.

In einer bevorzugten Ausführungsform der Erfindung wird das Verfahren mit einem Matrix-Sortierer betrieben, bei welchem die Sortierstufen als Mehrzahl von räumlich hintereinander angeordneten Gruppen von Sortierbahnen ausgebildet sind, wobei zwischen zueinander benachbarten Sortierstufen jeweils eine Sammelbahn angeordnet ist.

Der oben referenzierte Stand der Technik beschreibt einen solchen Matrix-Sortierer, welcher auch die häufigste Bauart darstellt. Diese Anordnung optimiert die erforderliche Zeit für den Durchlauf zwischen den Sortierstufen. Freiwerdende (niedrige) Sortierstufen können bereits wieder für einen folgenden Sortiervorgang genutzt und belegt werden, auch wenn sich die Stückgüter aus einem vorangehenden Sortiervorgang ggf. noch in nachfolgenden (höheren) Sortierstufen befinden.

In einer alternativen Gestaltung der Erfindung wird das Verfahren mit einem Matrix-Sortierer betrieben, bei welchem mehrere Sortierstufen durch eine einzige physische Gruppe von Sortierbahnen gebildet sind, welche mehrmals durchlaufen werden, indem die Stückgüter von der Ausgabeseite der Sortierbahnen über eine ansteuerbare Weiche zu der Zulaufbahn zurückgeführt werden, bis die vorgegebene Anzahl der Sortierstufen durchlaufen wurde. Dieselben Sortierbahnen bilden also in zeitlicher Folge unterschiedliche Sortierstufen. Nach erfolgter Sortierung wird die sortierte Folge von Stückgütern in das nachgeordnete Fördersystem gefördert.

Dieser Ansatz reduziert den Bedarf an physischem Raum und verringert die Kosten für zusätzliche Sortierbahnen.

In einer bevorzugten Ausführungsform werden die Sortierwerte für jede Anzahl der zu sortierenden Stückgüter durch Simulation der Sortierung mit Ausführung des Algorithmus und in Abhängigkeit von der Anzahl der Sortierstufen und der Sortierbahnen bestimmt, wobei nacheinander jeweils eine Menge von Sortierwerten aus einer eine Vielzahl von Mengen von Sortierwerten der Simulation zugeführt wird und solche Mengen von Sortierwerten als erfindungsgemäß geeignet ausgewählt werden, welche zu einer bedingungsgemäßen Verteilung der Sortierwerte auf die Sortierbahnen in allen Sortierstufen führen.

Die Simulation der Sortiervorgänge ist unter Anwendung des Algorithmus für eine vorgegebene Gruppe von Sortierwerten problemlos durchführbar.

Die Sortierwerte werden dazu in den Algorithmus als Eingabewerte gespeist und es werden für jede Sortierstufe jeweils zugeordnete Sortierbahnen bestimmt. Zu jedem Sortierwert gibt es entsprechend in jeder Sortierstufe eine zugeordnete Sortierbahn. Die resultierende Verteilung der simulierten Sortierungen auf die Sortierbahnen wird jeweils ausgewertet und es werden solche Gruppen von Sortierwerten verworfen, welche nicht die oben genannten Bedingungen hinsichtlich der maximalen oder minimalen Anzahl von Stückgütern pro Sortierbahn erfüllen. Diejenigen Gruppen von Sortierwerten, welche die Bedingungen erfüllen, können erfindungsgemäß für eine Zuordnung zu Stückgütern genutzt werden.

Es ist in diesem Zusammenhang vorteilhaft, wenn die Ergebnisse der Simulation in Zuordnung zu der Anzahl von Stückgütern gespeichert werden und bei Beginn eines Sortiervorgangs die Sortierwerte in Abhängigkeit von der Anzahl von Stückgütern aus dem Speicher abgerufen werden. Da die Simulationen mit Rechenaufwand verbunden sein können, ist eine Vorrats-Berechnung von zulässigen Sortierwerten und deren Speicherung in Zuordnung zu einer Anzahl von zu sortierenden Stückgütern sinnvoll. Dies beschleunigt das spätere Sortieren und reduziert vorzuhaltende Rechenkapazitäten. Hinsichtlich der zu simulierenden Mengen von Sortierwerten ist es im Rahmen der Erfindung sinnvoll, nur Mengen mit Anzahlen von Sortierwerten einer Simulation zuzuführen, welche auch tatsächlich in dem physischen Aufbau der angesteuerten Matrix-Sortierer zu verarbeiten sind. Eine Simulation ist entsprechend nur bis zu einer Anzahl von Sortierwerten pro Menge sinnvoll, die auch tatsächlich bei optimierter Verteilung in den Sortierbahnen aller Sortierstufen aufzunehmen sind. Die Simulationen sind im Falle einer Vorrats-Berechnung außerdem in den Grenzen der praktisch relevanten Anzahlen von zu sortierenden Stückgütern durchzuführen, so dass für jede zulaufende, zu sortierende Anzahl eine Gruppe von Sortierwerten bereitsteht.

Entsprechend geeignete Gruppen von Sortierwerten können im Steuersystem dauerhaft gespeichert werden und auch mit dem gesamten Fördersystem als Teil der Steuersoftware ausgeliefert werden. Eine Nachrüstung vorhandener Matrix-Sortierer ist jedoch durch entsprechende Nachrüstung der Steuersysteme ebenfalls problemlos möglich.

Wird als Sortieralgorithmus der Radix-Sortieralgorithmus verwendet, so lässt sich die Gesamtzahl der zu sortierenden Stückgüter aus der Anzahl der Sortierstufen und der jeweiligen Sortierbahnen ableiten. Ein Matrix-Sortierer mit drei Sortierstufen und jeweils sechs Sortierbahnen hat eine theoretische Sortierkapazität von $6^3=216$ Stückgütern. Demzufolge ist es für solche Systeme geboten, Gruppen von Sortierwerten zu erzeugen, die höchstens 216 Elemente enthalten. Zu jeder Gruppengröße X kann dann beispielsweise ein Größensortiertes Array $S_X(y)$ der Sortierwerte abgespeichert werden. Wird dann dem Matrix-Sortierer eine Anzahl von X Stückgütern zur Sortierung zugeführt, wird jedem Stückgut ein Sortierwert $S_X(1)$... $S_X(X)$ aus dem zugehörigen Array zugeordnet. Ist eine geordnete Speicherung der Sortierwerte im Array gewährleistet, kann durch einen laufenden Index zu jedem Stückgut ein passender Sortierwert in einfacher Weise zugeordnet werden.

In einer bevorzugten Gestaltung der Erfindung wird als Sortieralgorithmus der Radix-Sortieralgorithmus verwendet und die Sortierwerte werden für jede Stückzahl in einem Zahlensystem gebildet, dessen Basis der Anzahl der Sortierbahnen entspricht und deren Anzahl von Ziffernstellen der Anzahl der Sortierstufen entspricht. Die Sortierwerte werden derart gebildet, dass an jeder der Ziffernstellen jede Ziffer mit einer maximalen Häufigkeit entsprechend der vorgegebenen Obergrenze und/oder an jeder der Ziffernstellen jede Ziffer mit einer minimalen Häufigkeit entsprechend der vorgegebenen Untergrenze vorkommt.

Eine solche Berechnung ist zur Generierung von erfindungsgemäß verwendbaren Sortierwerten mit einfachen Programmen möglich. Eine mögliche Programmierung sieht z.B. bei einem Matrix-Sortierer mit drei Sortierstufen und jeweils sechs Sortierbahnen, also in einem Zahlensystem zur Basis 6, folgende Schritte vor (wobei beispielhaft davon ausgegangen wird, dass mindestens sechs Stückgüter sortiert werden):

- Initialisiere eine Liste mit den Start-Sortierwerten: 000, 111, 222, 333, 444, 555.

- Erstelle eine Funktion, die die Häufigkeit jeder Ziffer an jeder Stelle in den bisher generierten Sortierwerte zählt.

- Erzeuge einen neuen Sortierwert, indem für jede Stelle die am wenigsten häufige Ziffer bevorzugt wird. Bei Gleichverteilung wird eine Zufallsziffer gewählt. Erlaubt sind die Ziffern 0, 1, 2, 3, 4, 5

- Überprüfe, ob der neu generierte Sortierwert bereits in der Liste vorhanden ist. Falls ja, versuche, eine alternative Ziffer (die zweithäufigste) für eine der Positionen zu verwenden, ohne dabei die Eindeutigkeit des Sortierwerts zu beeinträchtigen.

- Füge den neuen, einzigartigen Sortierwert der Liste hinzu.

- Wiederhole die Schritte, bis die gewünschte Anzahl an Sortierwerten erreicht ist.

Je nach Implementierung des Algorithmus im Steuersystem des Matrix-Sortierers können nachfolgend die ermittelten Sortierwerte in ein anderes Zahlensystem umgerechnet werden, z.B. in das Dezimalsystem.

Es ist vorteilhaft, wenn die vorgegebene Obergrenze in Abhängigkeit von den Abmessungen sämtlicher oder ausgewählter Stückgüter bestimmt wird.

Wenn die Anpassung der Obergrenze und die Förderung entsprechend an die physischen Größenabmessungen oder das Gewicht der Stückgüter geknüpft wird, resultiert eine bessere Anpassungsfähigkeit des Matrix-Sortierers. Diese Anpassungsfähigkeit erlaubt es dem System, auf unterschiedliche Größen und Formen der Stückgüter zu reagieren, was die Anwendbarkeit des Sortierverfahrens erweitert. Zum Beispiel können in Logistikzentren mit Hängeförderern bedarfsweise Umstellungen von der Förderung flacher Artikel (z.B. Oberbekleidung) zu sperrigeren Artikeln (z.B. Schuhen in Kartons) erfolgen, wobei die erfindungsgemäße Steuerung jederzeit eine optimierte Förderung und Auslastung sicherstellt.

In einer Weiterbildung der Erfindung wird die Anzahl der Stückgüter, welche auf die Zulaufbahn gefördert werden, in Abhängigkeit von den Abmessungen sämtlicher oder ausgewählter Stückgüter vorgegeben.

Auch diese Anpassung erlaubt es dem System, auf unterschiedliche Größen und Formen der Stückgüter zu reagieren, was die Anwendbarkeit des Sortierverfahrens erweitert.

Das erfindungsgemäße Verfahren ist in seiner allgemeinen Anwendung üblicherweise darauf ausgelegt, sämtliche Sortierbahnen aller Sortierstufen auszulasten. Im Rahmen der Erfindung besteht jedoch auch die Möglichkeit, einzelne Sortierbahnen gezielt aus der Sortierung herauszunehmen. Dies kann durch die Simulation oder die Bestimmung passender Sortierwerte erreicht werden. Dadurch kann die Anzahl der zu sortierenden Stückgüter gegebenenfalls reduziert werden, sodass der Matrix-Sortierer zeitweise mit weniger Sortierbahnen betrieben wird. Infolgedessen werden lediglich solche Sortierwerte verwendet, die dazu führen, dass keine Förderung auf die auszusparenden Sortierbahnen erfolgt. Im Falle eines Defekts einzelner Sortierbahnen kann der Matrix-Sortierer mit geringerer Kapazität weiterarbeiten, während der Defekt an der betroffenen Sortierbahn behoben wird. Ist der Defekt behoben, kann wieder zu Sortierungen mit einer größeren Anzahl von Sortierwerten zurückgekehrt werden, um die reparierte Sortierbahn wieder auszulasten. Aus einem Matrix-Sortierer mit drei Sortierstufen und jeweils sechs Sortierbahnen kann dann z.B. zeitweise ein Matrix-Sortierer mit drei Stufen und jeweils fünf Sortierbahnen gebildet werden, welcher mit verringerter Sortierkapazität weiterarbeitet. Die Vergabe der Sortierwerte genügt, um die gewünschte Änderung herbeizuführen. Dies kann jederzeit, also auch während des Betriebs zwischen zwei zu sortierenden Gruppen (Batches) von Stückgütern, erfolgen.

Die Erfindung wird nun anhand der beiliegenden Zeichnung erläutert.

     Figuren 1a, 1b und 1c zeigen schematisch die Verteilung von Stückgütern in einem Matrix-Sortierer bei einem Sortiervorgang gemäß dem Stand der Technik;
     Figuren 2a, 2b und 2c zeigen schematisch die Verteilung von Stückgütern in einem Matrix-Sortierer bei einem Sortiervorgang gemäß einer ersten Ausführungsform der Erfindung;
     Figur 3 zeigt schematisch eine tabellarische Zuordnung von Zielposition von Stückgütern zu Sortierwerten gemäß der ersten Ausführungsform der Erfindung;
     Figur 4 zeigt schematisch die Sortierung gemäß dem ersten Ausführungsbeispiel der Erfindung in einer Darstellung mit Angabe der Sortierwerte;

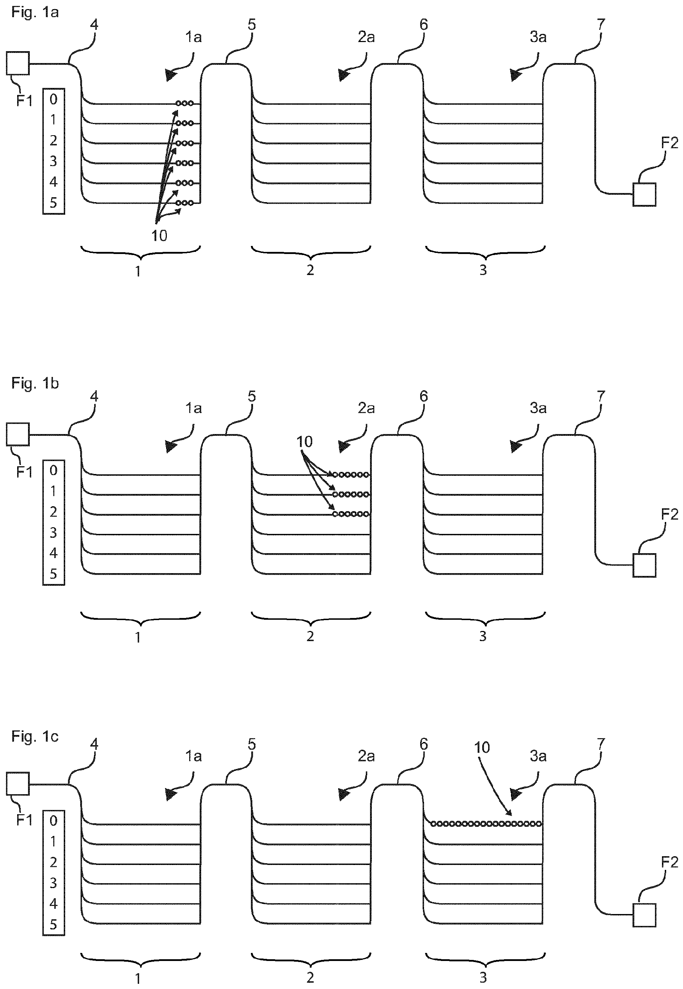

     Die Figuren 1a, 1b und 1c veranschaulichen den Aufbau und Ablauf eines Sortierverfahrens in einem Matrix-Sortierer gemäß dem Stand der Technik. Der dargestellte Matrix-Sortierer, welcher mit demselben physischen Aufbau auch mit dem erfindungsgemäßen Verfahren verwendet wird, weist Sortierstufen 1, 2, 3 auf, die ihrerseits jeweils Gruppen von sechs Sortierbahnen 1a, 2a bzw. 3a aufweisen. Der Matrix-Sortierer ist als Komponente eines Fördersystems ausgebildet, dem vorgeordnet und nachgeordnet weitere Förderkomponenten mit Förderstrecken zugeordnet sein können. Die Sortierbahnen sind in allen Sortierstufen 1 bis 3 in der Darstellung von 0 bis 5 durchnummeriert. Von einem vorgeordneten Teil F1 des Fördersystems werden Stückgüter 10 über eine Zulaufbahn 4 in den Matrix-Sortierer gefördert. Jede der Sortierbahnen 1a, 2a, 3a weist auf der Eingangsseite (in den Figuren 1a, 1b und 1c links) eine ansteuerbare Weiche auf, welche mit einem Steuersystem des Matrix-Sortierers gekoppelt ist. Über die Zulaufbahn 4 geförderte Stückgüter 10 werden durch Ansteuerung der Weichen auf eine der sechs Sortierbahnen 1a gefördert. Die Zuordnung eines einlaufenden Stückguts zu einer der sechs Sortierbahnen 1a erfolgt gemäß einem Sortieralgorithmus.

Jedem der Stückgüter ist ein Sortierwert zugewiesen. Der Sortierwert gibt mit seinem Wert in der Gesamtheit der für die Stückgüter vergebenen Sortierwerte an, welche Position in der Folge von geförderten Stückgütern das dem Sortierwert zugeordnete Stückgut nach Durchlauf durch den Matrix-Sortierer einnehmen soll. Beispielsweise werden die Sortierwerte nach Größe absteigend oder aufsteigend durch den Sortieralgorithmus sortiert.

Der Sortieralgorithmus ist im Steuersystem implementiert und das Steuersystem steuert die Weichen zur Förderung der Stückgüter entsprechend den Ausgaben des Algorithmus. In diesem Beispiel gemäß dem Stand der Technik, wie auch bei dem später beschriebenen Ausführungsbeispiel der Erfindung, wird als Algorithmus ein Radix-Sortieralgorithmus eingesetzt. In diesem Verfahren gemäß dem Stand der Technik werden die Sortierwerte bestimmt, indem den Stückgütern eine Zielposition in Abhängigkeit von bestimmten Eigenschaften zugeordnet wird. Anschließend werden den Stückgütern Zahlen als Sortierwert zugeordnet, die der Zielposition entsprechen. Die Positionen der Stückgüter entlang der Förderstrecke im Matrix-Sortierer sind zu jedem Zeitpunkt bekannt, sodass die Steuereinrichtung die Weichenstellungen zur Förderung auf eine der sechs Sortierbahnen 1a vornimmt. In einem Matrix-Sortierer mit drei Sortierstufen (S=3) und jeweils sechs Sortierbahnen (M=6) in jeder der Stufen können 216 Stückgüter (6^3) in einem Durchlauf sortiert werden. Der Radix-Sortieralgorithmus führt bei einer Anzahl K von zu sortierenden Stückgütern zu einer Ansteuerung der Weichen, welche die Verteilung der Stückgüter 10 auf eine der Sortierbahnen 1a gemäß folgender Formel bestimmt:

$$m_s = ((p-1) \; \mathrm{div} \; M^{s-1}) \; \mathrm{mod} \; M$$

mit

$m_s$: Ziel-Sortierbahn [0..M-1] in der Sortierstufe s [1..S]
M: Anzahl der Sortierbahn je Sortierstufe
div: Ganzzahldivision
mod: Modulo
p: Gewünschte Sortierposition des Teils innerhalb eines Durchlaufs mit K Teilen ($1 \leq p \leq K$).

Im dargestellten Beispiel ergibt sich für die Position in jeder der Sortierstufen:

$$m_s = ((p-1) \; \mathrm{div} \; 6^{s-1}) \; \mathrm{mod} \; 6$$

Die Bahnen werden in dieser Betrachtung von 0 ausgehend durchnummeriert, was das Verständnis der nachfolgenden Erläuterungen zur Erfindung erleichtert. Bei der in den Figuren 1a bis 1c beispielhaft dargestellten Ausführung gemäß dem Stand der Technik ergeben sich bei 18 zu sortierenden Stückgütern und Sortierwerten von 1 bis 18 die Verteilungen auf die Sortierbahnen 1a wie dargestellt.

In der Sortierstufe 1 sind die Stückgüter 10 auf die sechs Sortierbahnen 1a gleichmäßig verteilt. Im Anschluss werden die Stückgüter auf der Sammelbahn 5 konsolidiert, wobei die Sortierbahnen 1a zunächst nacheinander auf die Sammelbahn 5 entleert werden. In der Sortierstufe 2 erfolgt die Verteilung der Stückgüter 10 entsprechend der Sortierwerte und dem Radix-Sortier-Algorithmus, was zu der Verteilung der Figur 1b führt. Bereits hier führt das Verfahren nach dem Stand der Technik zu einer ungleichmäßigen Auslastung der Sortierbahnen 2a. Nach der Förderung über die Sammelbahn 6 zur Sortierstufe 3 sind die Stückgüter auf einer einzigen der Sortierbahnen 3a angeordnet. Von dort werden die sortierten Stückgüter in einen nachgeordneten Teil F2 des Fördersystems gefördert.

Auch wenn in der Realität größere Anzahlen von Stückgütern in einem Sortiervorgang sortiert werden und die Verteilung auf die Bahnen dann ggf. weniger konzentriert ausfällt, lässt sich anhand der Darstellung ersehen, dass es bei dieser herkömmlichen Anwendung des Sortierverfahrens zu einer Überlastung von Sortierbahnen kommen kann oder in vielen Fällen eine Unterauslastung des Matrix-Sortierers in Kauf zu nehmen ist.

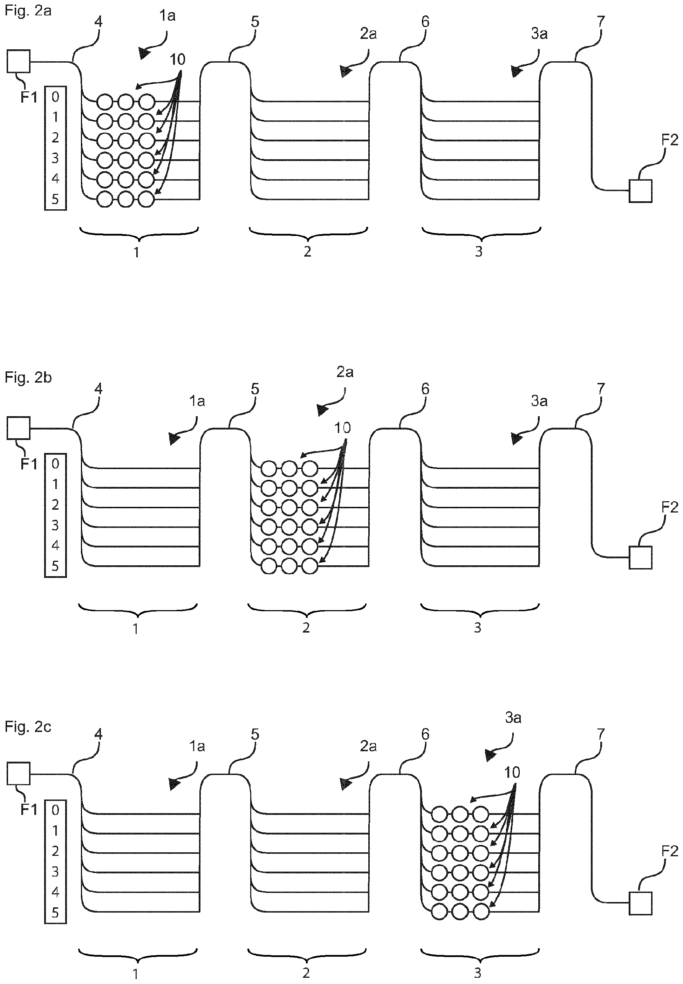

Die Figuren 2a, 2b und 2c zeigen den gleichen Matrix-Sortierer mit derselben Anzahl an Sortierstufen 1, 2, 3 und derselben Anzahl von Sortierbahnen 1a, 2a, 3a in jeder Sortierstufe. Die dargestellte Sortierung gemäß der ersten Ausführungsform der Erfindung führt jedoch dazu, dass die Sortierbahnen 1a, 2a, 3a über alle Sortierstufen gleichmäßig ausgelastet werden. Es werden ebenso wie im vorhergehenden Beispiel gemäß dem Stand der Technik 18 Stückgüter in die Sortierung gefördert, die Stückgüter sind jedoch hier mit wesentlich größeren Abmessungen dargestellt. Das erfindungsgemäße Verfahren erlaubt es, deutlich größere Stückgüter bei identischer Anzahl zum Beispiel aus dem Stand der Technik zu sortieren, da jederzeit eine gleiche Auslastung der Sortierbahnen gewährleistet ist. In diesem Ausführungsbeispiel wurde durch die Vorgabe der Sortierwerte dafür gesorgt, dass die Höchstzahl der Stückgüter auf jeder der Sortierbahnen in sämtlichen Stufen der Anzahl drei entspricht. Die Division der Anzahl der Stückgüter (insgesamt 18) durch die Anzahl der Sortierbahnen (nämlich jeweils sechs) ergibt das genannte Resultat. Ein entsprechendes Ergebnis würde allerdings auch bei einer Festlegung der Mindestanzahl der Stückgüter für jede der Sortierbahnen auf drei erzielt werden. Der wesentliche Unterschied des erfindungsgemäßen Verfahrens, wie es in den Figuren 2a, 2b und 2c dargestellt ist, gegenüber dem herkömmlichen Verfahren besteht in der besonderen Auswahl der Sortierwerte. Die Sortierwerte sind in diesem Ausführungsbeispiel gemäß der Erfindung nicht als einfache Folge von aufsteigenden Zahlen den Stückgütern zugeordnet, sondern sie sind so vorgegeben, dass die Gleichverteilung auf die Sortierbahnen bei unveränderter Anwendung des Radix-Sortieralgorithmus erreicht wird.

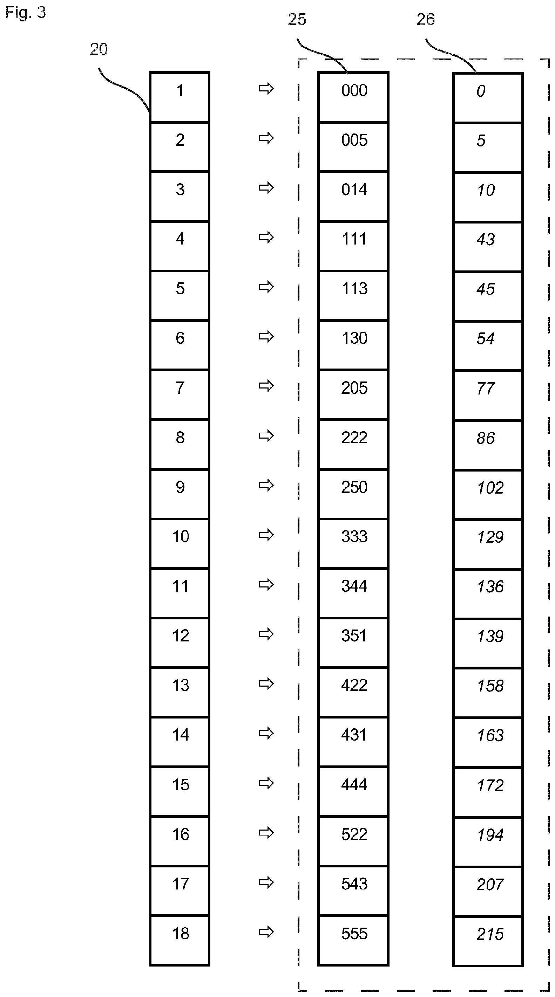

In Figur 3 wird das entsprechende Zuordnungsverfahren dargestellt, welches vor Zulauf der Stückgüter in die erste Sortierstufe 1 vorgenommen wird. In der linken Spalte 20 ist eine aufsteigende Folge von Zahlen von 1 bis 18 dargestellt. Diese Werte stellen in ihrer Ordnung die angestrebten Zielpositionen der Stückgüter nach der Sortierung dar. Die direkte Verwendung dieser Werte der linken Spalte 20 als Sortierwerte führt zu der Sortierung gemäß den Figuren 1a, 1b und 1c und entspricht dem Stand der Technik. Gemäß der Erfindung werden jedoch nicht diese Werte als Sortierwerte verwendet, sondern es werden Sortierwerte entweder berechnet oder tabellarisch nachgeschlagen, welche zu einer gewünschten Verteilung der Stückgüter über die Sortierbahnen führt. In diesem Beispiel stellen die beiden rechten Spalten 25, 26 die entsprechenden Sortierwerte dar, welche zu der gewünschten Verteilung führen. Die äußerst rechte Spalte 26 ist dabei mit Sortierwerten im Dezimalsystem dargestellt, während die mittlere Spalte 25 die entsprechenden Werte im Senärsystem (also zur Basis 6) zeigt. Die Verwendung von Sortierwerten, bei denen im Senärsystem die Ziffern an allen Stellen der Sortierwerte gleichverteilt sind, ist bei Betrachtung der Spalte 25 ersichtlich. Dies entspricht der Zuordnung von Bahnen entsprechend diesen Ziffern, was zu einer Gleichverteilung der Stückgüter auf die jeweiligen Bahnen führt. Dies führt zu einer deutlichen Verbesserung der Auslastung der Bahnen und sogar der gezielten Steuerung der Auslastung einzelner Bahnen. Dabei kann zunächst eine gewünschte Reihenfolge der zu sortierenden Stückgüter bestimmt werden, wie im Stand der Technik, was im Wesentlichen der Reihenfolge in der linken Spalte aus Figur 3 entspricht. Anschließend wird jedem Stückgut ein Sortierwert aus der rechten Spalte (je nach geforderter Zahlenbasis des Sortieralgorithmus 25 oder 26) zugewiesen. Die Zuordnung erfolgt rangbasiert: Das Stückgut, welches Position 1 in der gewünschten Reihenfolge einnehmen soll, erhält den kleinsten Sortierwert. Das Stückgut für Position 2 erhält den zweitkleinsten Sortierwert, und so weiter. Der Radix-Sortieralgorithmus führt die Sortierung anhand dieses Sortierwertes durch. Es sei angemerkt, dass für jede Anzahl K von Stückgütern eine entsprechende Zuordnungstabelle gespeichert sein kann (in diesem Beispiel für K=18). Im Falle des gezeigten Beispiels mit drei Sortierstufen und jeweils sechs Sortierbahnen würden also zum Beispiel 216 Tabellen hinterlegt, welche zu jeder gewünschten Anzahl K <= 216 eine Zuordnung der gewünschten Sortierposition zu einem Sortierwert erlauben.

Die Sortierwerte können, wie bereits oben beschrieben, zur Hinterlegung in der Tabelle mit einer Simulation bestimmt werden. Dazu wird für jede Anzahl von Kombinationen möglicher Sortierwerte der Sortierverlauf berechnet. Anschließend werden nur diejenigen Kombinationen von Sortierwerten gespeichert, die eine gewünschte Verteilung ergeben. Im genannten Beispiel würde für die gewünschte Sortierung von 100 Stückgütern im Dezimalsystem eine Auswahl von 100 Zahlen getroffen, die von 0 bis 215 (oder 1 bis 216) einer simulierten Sortierung zugeführt werden. Die Ermittlung einer geeigneten Kombination, welche die gewünschte Verteilung der Stückgüter auf den Sortierbahnen gewährleistet, erfolgt durch die simultane oder alternative Berücksichtigung zweier Kriterien: einer Mindestanzahl von Stückgütern auf jeder der Sortierbahnen sowie einer Höchstanzahl. Alternativ können die Werte auch diskret berechnet werden. Dies kann insbesondere dann geschehen, wenn, wie hier im Beispiel, eine Betrachtung in einem anderen Zahlensystem mit anderer Basis möglich ist. Es ist aus Figur 3, dort mittlere Spalte ersichtlich, dass eine entsprechende Zahlenfolge, bei welcher erlaubten Ziffern in ihrer Häufigkeit den vorgesehenen Verteilungen an jeder Stelle der Zahlen entsprechen, mit einem entsprechenden Algorithmus erzeugt werden kann.

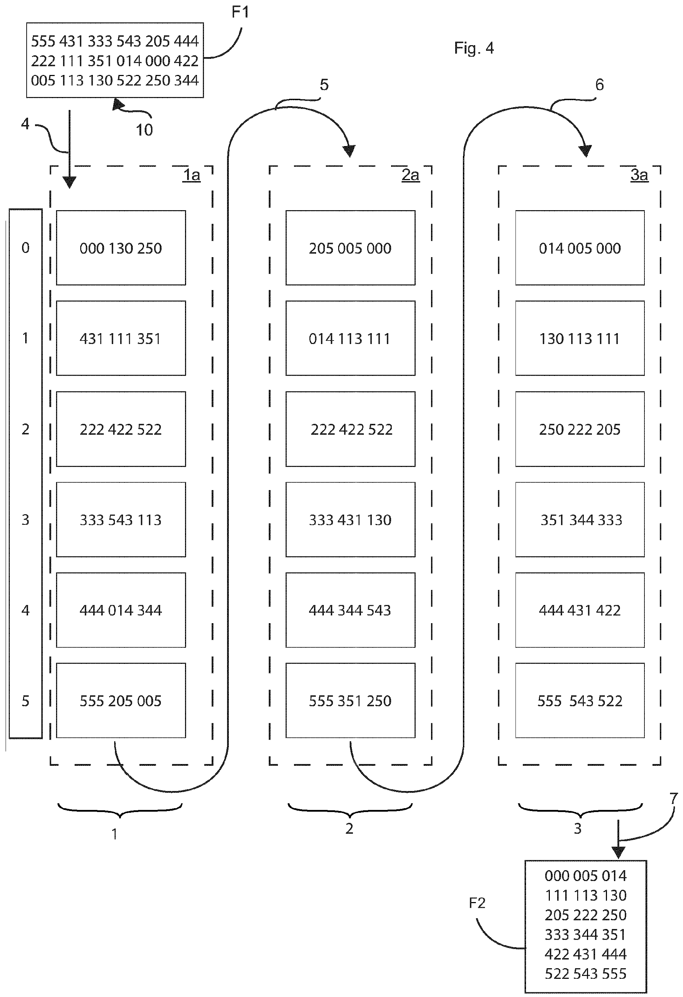

Die Figur 4 veranschaulicht die Korrespondenz zwischen der Belegung, wie sie in den Figuren 2a, 2b und 2c entlang der Sortierung gezeigt ist, und den entsprechenden Sortierwerten. Die unsortierten Stückgüter 10 werden hier durch ihre Sortierwerte dargestellt, welche den Sortierwerten aus Figur 3, dort mittlere Spalte, entsprechen. In der ersten Sortierstufe werden die Stückgüter, welche als dritte Ziffer eine 0 aufweisen, auf die Sortierbahnen 0 sortiert. Entsprechend werden die weiteren Sortierbahnen mit Stückgütern beschickt, welche die korrespondierende Ziffer als letzte Ziffer aufweisen. Im Anschluss werden die Stückgüter 10 von der Sortierstufe 1 über die Sammelstrecke 5 in die Sortierstufe 2 gefördert. Dort erfolgt die Sortierung und Zuordnung der Stückgüter 10 zu den jeweiligen Sortierbahnen gemäß der Ziffer an der zweiten Stelle der Sortierwerte. Im Anschluss werden die Stückgüter über die Sammelstrecke 6 in die Sortierstufen 3 gefördert und dort gemäß der Ziffer an der ersten Stelle auf die Sortierbahnen verteilt. Anschließend werden die Stückgüter sortiert in den jeweiligen Sortierbahnen 3a bereitgestellt und in das nachgeordnete Fördersystem F2 ausgegeben. Dabei werden die Stückgüter 10 nacheinander abgegeben, beginnend mit der Bahn 0 der Sortierbahnen 3a. Dies resultiert in der sortierten Reihenfolge, wie unten rechts im nachgeordneten Fördersystem F2 dargestellt.

Die Darstellung verdeutlicht zudem, dass jede Sortierbahn über den gesamten Sortierprozess hinweg eine gleichmäßige Auslastung aufweist.

Die Erfindung ist grundsätzlich auch auf andere Sortierverfahren mit Matrix-Sortierern übertragbar. Die Auswahl der Sortierwerte ist beim hier vorgestellten Radix-Sortieralgorithmus besonders gut nachvollziehbar, da ein Wechsel in ein Zahlensystem mit entsprechender Zahlenbasis die Regelmäßigkeiten der Sortierwerte erkennen lässt. Eine Simulation anderer Algorithmen zur Sortierung ist ebenfalls möglich, sofern diese deterministisch arbeiten. Da eine Simulation zur Ermittlung von geeigneten Sortierwerten üblicherweise für jede Gruppengröße (Anzahl zu sortierender Stückgüter) nur einmal erfolgen muss, ist der diesbezügliche Rechenaufwand für die spätere Ausführung der Sortierung vernachlässigbar. So lassen sich entsprechende Verweistabellen auch für Matrix-Sortierer mit anderen Anzahlen von Sortierstufen und/oder anderen Anzahlen von Sortierbahnen auf jeder der Sortierstufen bestimmen.

**Patentansprüche**

1. Verfahren zum Sortieren von Stückgütern (10), wobei die Stückgüter in einer Förderanlage entlang Förderbahnen geführt werden,

   wobei jedem der unsortierten Stückgüter (10) ein Sortierwert (25, 26) zugeordnet wird, wobei eine Ordnung der Sortierwerte (25, 26) aller Stückgüter (10) eine Reihenfolge der Stückgüter (10) nach der Sortierung vorgibt,
   wobei die Stückgüter (10) hintereinander von einer gemeinsamen Zulaufbahn (4) zur Sortierung durch eine Mehrzahl von Sortierstufen (1, 2, 3) gefördert werden,

wobei die Stückgüter (10) in jeder Sortierstufe (1, 2, 3) mittels steuerbarer Weichen auf jeweils eine von einer Mehrzahl alternativer Sortierbahnen (1a, 2a, 3a) gefördert werden, wobei die Stückgüter (10) von der Mehrzahl alternativer Sortierbahnen (1a, 2a, 3a) zwischen den Sortierstufen (1, 2, 3) auf eine Sammelbahn (5, 6) zusammengeführt werden,

wobei die Zuordnung der Stückgüter (10) in jeder der Sortierstufen (1, 2, 3) zu einer der alternativen Sortierbahnen (1a, 2a, 3a) erfolgt, indem der Sortierwert (25, 26) jedes der Stückgüter (10) in einem deterministischen Sortieralgorithmus ausgewertet wird und die Weichensteuerung zur Förderung auf die alternativen Sortierbahnen (1a, 2a, 3a) in jeder der Sortierstufen (1, 2, 3) in Abhängigkeit von der Auswertung gesteuert wird,

wobei nach Durchlaufen einer vorgegebenen Anzahl von Sortierstufen (1, 2, 3) die sortierten Stückgüter (10) hintereinander auf eine gemeinsame Ausgabebahn (7) gefördert werden,

wobei vor Förderung der Stückgüter (10) in die Sortierstufen (1, 2, 3) durch ein computerimplementiertes Optimierungsverfahren in Abhängigkeit von der Anzahl der zu sortierenden Stückgüter (10) und in Abhängigkeit von dem verwendeten Sortieralgorithmus die Sortierwerte (25, 26) in Abhängigkeit von dem Sortieralgorithmus bestimmt werden, **dadurch gekennzeichnet, dass** die Sortierwerte (25, 26) eine von der sequenziellen Zielposition abweichende, aber ordnungserhaltende Zahlenfolge bilden, die bei Ausführung des Sortieralgorithmus zu der gleichmäßigen Auslastungsverteilung führt, bei der in jeder der Sortierstufen (1, 2, 3) für alle Sortierbahnen (1a, 2a, 3a) gilt, dass die maximale Anzahl von Stückgütern (10) auf jeder Sortierbahn einer vorgegebenen Obergrenze entspricht und/oder die minimale Anzahl von Stückgütern (10) auf jeder Sortierbahn (1a, 2a, 3a) einer vorgegebenen Untergrenze entspricht.

2. Verfahren nach Anspruch 1, umfassend die Verfahrensschritte:

   a) Ermittlung der Gesamtanzahl (K) der zu sortierenden Stückgüter (10),
   b) Bestimmung einer gewünschten Sortierreihenfolge der Stückgüter (10) basierend auf Sortierkriterien,
   c) Berechnung oder Abruf einer optimierten Gruppe von Sortierwerten (25, 26) aus einem Datenspeicher, wobei die Anzahl der Sortierwerte der Gesamtanzahl (K) entspricht,

   d) Zuordnung der optimierten Sortierwerte (25, 26) zu den Stückgütern (10) entsprechend der gewünschten Sortierreihenfolge, wobei die Zuordnung der Sortierwerte (25, 26) zu den Stückgütern (10) durch eine monotone Abbildung erfolgt, bei der die Ordnung der gewünschten Zielpositionen der Stückgüter der Ordnung der zugeordneten Sortierwerte entspricht,
   e) Ausführung der Sortierung mit den zugeordneten optimierten Sortierwerten (25, 26).

3. Verfahren nach Anspruch 1 oder 2, wobei

   - die Obergrenze dem aufgerundeten ganzzahligen Wert entspricht, der sich aus einer Division der Anzahl der zu sortierenden Stückgüter (10) durch die Anzahl der Sortierbahnen (1a, 2a, 3a) einer Sortierstufe (1, 2, 3) ergibt oder
   - wobei die Untergrenze dem abgerundeten ganzzahligen Wert entspricht, der sich aus einer Division der Anzahl der zu sortierenden Stückgüter (10) durch die Anzahl der Sortierbahnen (1a, 2a, 3a) einer Sortierstufe (1, 2, 3) ergibt.

4. Verfahren nach einem der vorangehenden Ansprüche, wobei die Anzahl der Sortierbahnen (1a, 2a, 3a) in allen Sortierstufen (1, 2, 3) identisch ist.

5. Verfahren nach einem der vorangehenden Ansprüche, wobei als Sortieralgorithmus ein Radix-Sortieralgorithmus verwendet wird.

6. Verfahren nach einem der vorangehenden Ansprüche, wobei die Sortierstufen (1, 2, 3) als Mehrzahl von räumlich hintereinander angeordneten Gruppen von Sortierbahnen (1a, 2a, 3a) ausgebildet sind, wobei zwischen zueinander benachbarten Sortierstufen jeweils eine Sammelbahn (5, 6) angeordnet ist.

7. Verfahren nach einem der Ansprüche 1 bis 5, wobei mehrere Sortierstufen durch eine einzige Gruppe von Sortierbahnen gebildet sind, welche mehrmals durchlaufen werden, indem die Stückgüter von der Ausgabeseite der Sortierbahnen zu der Zulaufbahn zurückgeführt werden, bis die vorgegebene Anzahl der Sortierstufen durchlaufen wurde.

8. Verfahren nach einem der vorangehenden Ansprüche, wobei die Sortierwerte (25, 26) für jede Anzahl der zu sortierenden Stückgüter durch eine computerimplementierte Simulation der Sortierung mit Ausführung des Algorithmus und in Abhängigkeit von der Anzahl der Sortierstufen (1, 2, 3) und der Sortierbahnen (1a, 2a, 3a) bestimmt werden, wobei nacheinander jeweils eine Menge von Sortierwerten (25, 26) aus einer Vielzahl von Mengen von Sortierwerten der Simulation zugeführt wird und solche Mengen von Sortierwerten (25, 26) ausgewählt werden, welche zu einer gleichmäßige Auslastungsverteilung der Sortierwerte (25, 26) auf die Sortierbahnen (1a, 2a, 3a) in allen Sortierstufen (1, 2, 3) führen.

9. Verfahren nach Anspruch 8, wobei die ausgewählten Mengen von Sortierwerten (25, 26) der Simulation in Zuordnung zu der Anzahl von Stückgütern (10) gespeichert werden und bei Beginn eines Sortiervorgang die Sortierwerte (25, 26) in Abhängigkeit von der Anzahl von Stückgütern aus dem Speicher abgerufen werden.

10. Verfahren nach Anspruch 8 oder 9, welches die folgenden Schritte umfasst:

     a) Generierung einer Vielzahl von Kandidaten-Sortierwertgruppen mit jeweils K Sortierwerten, wobei K der Anzahl der zu sortierenden Stückgüter entspricht,
     b) für jede Kandidaten-Sortierwertgruppe: Simulation des vollständigen Sortierablaufs durch alle Sortierstufen (1, 2, 3) unter Anwendung des deterministischen Sortieralgorithmus,
     c) quantitative Bewertung der simulierten Stückgutverteilung auf den Sortierbahnen (1a, 2a, 3a) aller Sortierstufen (1, 2, 3) mittels eines Gleichverteilungsmaßes, d) Auswahl derjenigen Kandidaten-Sortierwertgruppe, welche die beste Gleichverteilung gemäß dem Gleichverteilungsmaß erzielt,

     wobei das Simulationsverfahren offline durchgeführt und die ermittelten optimalen Sortierwertgruppen in einem Datenspeicher in Zuordnung zu der jeweiligen Stückgutanzahl K gespeichert werden.

11. Verfahren nach einem der vorangehenden Ansprüche, wobei als Sortieralgorithmus der Radix-Sortieralgorithmus verwendet wird und wobei die Sortierwerte (25, 26) in einem Zahlensystem gebildet werden, dessen Basis der Anzahl der Sortierbahnen (1a, 2a, 3a) entspricht und deren Zahl von Ziffernstellen der Anzahl der Sortierstufen (1, 2, 3) entspricht, wobei die Sortierwerte (25, 26) derart gebildet werden, dass an jeder der Ziffernstellen jede Ziffer mit einer maximalen Häufigkeit entsprechend der vorgegebenen Obergrenze und/oder mit einer minimalen Häufigkeit entsprechend der vorgegebenen Untergrenze vorkommt.

12. Verfahren nach Anspruch 11, wobei die Sortierwerte (25, 26) für eine gegebene Anzahl K von zu sortierenden Stückgütern durch einen algorithmischen Berechnungsprozess generiert werden, mit den Schritten:

     a) Initialisierung einer Sortierwert-Liste für ein M-äres Zahlensystem mit S Stellen, wobei M der Anzahl der Sortierbahnen pro Sortierstufe und S der Anzahl der Sortierstufen entspricht,
     b) iterative Generierung von Sortierwerten durch systematische Konstruktion von Ziffernkombinationen unter Anwendung einer Gleichverteilungs-Optimierungsfunktion, welche wiederholt

          - für jede Ziffernstelle (1 bis S) die aktuelle Häufigkeitsverteilung aller Ziffern (0 bis M-1) in der bereits generierten Sortierwert-Liste ermittelt,
          - bei der Konstruktion jedes neuen Sortierwerts für jede Ziffernstelle diejenige Ziffer auswählt, welche an dieser Stelle die geringste aktuelle Häufigkeit aufweist,
          - bei mehreren Ziffern mit gleicher geringster Häufigkeit eine deterministische Auswahlregel anwendet, welche die lexikographisch kleinste Ziffer bevorzugt oder zufällig eine Ziffer auswählt,
          - die Zulässigkeit jeder konstruierten Ziffernkombination prüft, wobei ein Sortierwert als zulässig gilt, wenn durch dessen Hinzufügung keine Ziffer an irgendeiner Stelle eine Häufigkeit größer als dem gerundeten ganzzahligen Wert der Division von K durch M erreicht,

     c) Eindeutigkeitsprüfung jedes als zulässig bewerteten Sortierwerts gegen alle bereits in der Liste vorhandenen Sortierwerte, wobei bei Duplikaten die nächste zulässige Ziffernkombination durch systematische Modifikation der Ziffernauswahl unter Beibehaltung der Gleichverteilungs-Optimierung ermittelt wird,
     d) Hinzufügung jedes eindeutigen und zulässigen Sortierwerts zur Liste und Fortsetzung der iterativen Generierung bis die Liste K Sortierwerte enthält.

13. Verfahren nach einem der vorangehenden Ansprüche, wobei die vorgegebene Obergrenze in Abhängigkeit von den Abmessungen sämtlicher oder ausgewählter Stückgüter (10) bestimmt wird.

14. Verfahren nach einem der vorangehenden Ansprüche, wobei die Anzahl der Stückgüter (10), welche auf die Zulaufbahn (4) gefördert werden, in Abhängigkeit von den Abmessungen sämtlicher oder ausgewählter Stückgüter vorgegeben wird.

**Claims**

1. Method for sorting items (10), wherein the items are guided in a conveyor system along conveying paths, wherein each of the unsorted items (10) is assigned a sort key (25, 26), wherein an ordering of the sort keys (25, 26) of all items (10) defines a sequence of the items (10) after sorting, wherein the items (10) are conveyed one after another from a common infeed conveyor (4) for sorting through a plurality of sorting stages (1, 2, 3), wherein the items (10) are conveyed in each sorting stage (1, 2, 3) by means of controllable diverters onto a respective one of a plurality of alternative sorting lanes (1a, 2a, 3a), wherein the items (10) are merged from the plurality of alternative sorting lanes (1a, 2a, 3a) between the sorting stages (1, 2, 3) onto a collecting conveyor (5, 6), wherein the assignment of the items (10) in each of the sorting stages (1, 2, 3) to one of the alternative sorting lanes (1a, 2a, 3a) is carried out by evaluating the sort key (25, 26) of each of the items (10) in a deterministic sorting algorithm and the diverter control for conveying onto the alternative sorting lanes (1a, 2a, 3a) in each of the sorting stages (1, 2, 3) is controlled depending on the evaluation, wherein after passing through a predefined number of sorting stages (1, 2, 3) the sorted items (10) are conveyed one after another onto a common outfeed conveyor (7), wherein prior to conveying the items (10) into the sorting stages (1, 2, 3), the sort keys (25, 26) are determined by a computer-implemented optimization method depending on the number of items (10) to be sorted and depending on the sorting algorithm used, **characterized in that** the sort keys (25, 26) form an order-preserving numerical sequence which deviates from the sequential target position and which, upon execution of the sorting algorithm, leads to the balanced distribution in which, in each of the sorting stages (1, 2, 3) for all sorting lanes (1a, 2a, 3a), the maximum number of items (10) on each sorting lane corresponds to a predefined upper limit and/or the minimum number of items (10) on each sorting lane (1a, 2a, 3a) corresponds to a predefined lower limit.

2. Method according to claim 1, comprising the method steps:

> a) determining the total number (K) of items (10) to be sorted;
> b) determining a desired sorting sequence of the items (10) based on sorting criteria;
> c) calculating or retrieving an optimized group of sort keys (25, 26) from a data storage, wherein the number of sort keys equals the total number (K);
> d) assigning the optimized sort keys (25, 26) to the items (10) in accordance with the desired sorting sequence, wherein the assignment of the sort keys (25, 26) to the items (10) is carried out by a monotonic mapping in which the ordering of the desired target positions of the items corresponds to the ordering of the assigned sort keys;
> e) executing the sorting with the assigned optimized sort keys (25, 26).

3. Method according to claim 1 or 2, wherein the upper limit corresponds to the rounded-up integer value resulting from a division of the number of items (10) to be sorted by the number of sorting lanes (1a, 2a, 3a) of a sorting stage (1, 2, 3), or wherein the lower limit corresponds to the rounded-down integer value resulting from a division of the number of items (10) to be sorted by the number of sorting lanes (1a, 2a, 3a) of a sorting stage (1, 2, 3).

4. Method according to any one of the preceding claims, wherein the number of sorting lanes (1a, 2a, 3a) is identical in all sorting stages (1, 2, 3).

5. Method according to any one of the preceding claims, wherein a radix sort algorithm is used as the sorting algorithm.

6. Method according to any one of the preceding claims, wherein the sorting stages (1, 2, 3) are formed as a plurality of spatially successive groups of sorting lanes (1a, 2a, 3a), wherein a collecting conveyor (5, 6) is arranged between mutually adjacent sorting stages in each case.

7. Method according to any one of claims 1 to 5, wherein a plurality of sorting stages are formed by a single group of sorting lanes, which sorting lanes are traversed multiple times by returning the items from the output side of the sorting lanes to the infeed conveyor until the predefined number of sorting stages has been traversed.

8. Method according to any one of the preceding claims, wherein the sort keys (25, 26) for each number of items to be sorted are determined by a computer-implemented simulation of the sorting with execution of the algorithm and depending on the number of sorting stages (1, 2, 3) and sorting lanes (1a, 2a, 3a), wherein in each case one set of sort keys (25, 26) from a plurality of sets of sort keys is successively fed to the simulation and those sets of sort keys (25, 26) are selected which lead to a balanced distribution of the sort keys (25, 26) onto the sorting lanes (1a, 2a, 3a) in all sorting stages (1, 2, 3).

9. Method according to claim 8, wherein the selected sets of sort keys (25, 26) from the simulation are stored in association with the number of items (10), and at the start of a sorting operation the sort keys (25, 26) are retrieved from the data storage depending on the number of items.

**10.** Method according to claim 8 or 9, comprising the following steps:

a) generating a plurality of candidate sort key groups each having K sort keys, wherein K corresponds to the number of items to be sorted;
b) for each candidate sort key group: simulating the complete sorting sequence through all sorting stages (1, 2, 3) by applying the deterministic sorting algorithm;
c) quantitative evaluation of the simulated item distribution on the sorting lanes (1a, 2a, 3a) of all sorting stages (1, 2, 3) by means of a uniformity measure;
d) selecting the candidate sort key group which achieves the best balanced distribution according to the uniformity measure; wherein the simulation method is carried out offline and the determined optimal sort key groups are stored in a data storage in association with the respective item count K.

**11.** Method according to any one of the preceding claims, wherein the radix sort algorithm is used as the sorting algorithm and wherein the sort keys (25, 26) are formed in a numeral system whose base corresponds to the number of sorting lanes (1a, 2a, 3a) and whose number of digit positions corresponds to the number of sorting stages (1, 2, 3), wherein the sort keys (25, 26) are formed such that at each of the digit positions each digit occurs with a maximum frequency corresponding to the predefined upper limit and/or with a minimum frequency corresponding to the predefined lower limit.

**12.** Method according to claim 11, wherein the sort keys (25, 26) for a given number K of items to be sorted are generated by an algorithmic calculation process comprising the steps:

a) initializing a sort key list for a base-M numeral system with S digit positions, wherein M corresponds to the number of sorting lanes per sorting stage and S corresponds to the number of sorting stages;
b) iterative generation of sort keys by systematic construction of digit combinations using a balanced distribution optimization function which repeatedly:
determines, for each digit position (1 to S), the current frequency distribution of all digits (0 to M-1) in the already generated sort key list; selects, when constructing each new sort key for each digit position, the digit having the lowest current frequency at that position; applies, when multiple digits have the same lowest frequency, a deterministic selection rule which prefers the lexicographically smallest digit or selects a digit at random; checks the admissibility of each constructed digit combination, wherein a sort key is deemed admissible if its addition does not cause any digit at any position to reach a frequency greater than the rounded integer value of the division of K by M;
c) uniqueness check of each sort key assessed as admissible against all sort keys already present in the list, wherein in the event of duplicates the next admissible digit combination is determined by systematic modification of the digit selection while maintaining the balanced distribution optimization;
d) adding each unique and admissible sort key to the list and continuing the iterative generation until the list contains K sort keys.

**13.** Method according to any one of the preceding claims, wherein the predefined upper limit is determined depending on the dimensions of all or selected items (10).

**14.** Method according to any one of the preceding claims, wherein the number of items (10) conveyed onto the infeed conveyor (4) is predefined depending on the dimensions of all or selected items.

**Revendications**

**1.** Procédé de tri d'articles (10), dans lequel les articles sont guidés dans un système de convoyage le long de voies de transport, dans lequel chacun des articles non triés (10) se voit attribuer une clé de tri (25, 26), dans lequel un ordonnancement des clés de tri (25, 26) de tous les articles (10) définit un ordre de succession des articles (10) après le tri, dans lequel les articles (10) sont convoyés les uns derrière les autres depuis un convoyeur d'alimentation commun (4) pour être triés à travers une pluralité d'étages de tri (1, 2, 3), dans lequel les articles (10) sont convoyés dans chaque étage de tri (1, 2, 3) au moyen d'aiguillages commandables vers une voie de tri respective parmi une pluralité de voies de tri alternatives (1a, 2a, 3a), dans lequel les articles (10) sont regroupés depuis la pluralité de voies de tri alternatives (1a, 2a, 3a) entre les étages de tri (1, 2, 3) sur un convoyeur de regroupement (5, 6), dans lequel l'affectation des articles (10) dans chacun des étages de tri (1, 2, 3) à l'une des voies de tri alternatives (1a, 2a, 3a) est effectuée en évaluant la clé de tri (25, 26) de chacun des articles (10) dans un algorithme de tri déterministe et la commande des aiguillages pour le convoyage vers les voies de tri alternatives (1a, 2a, 3a) dans chacun des étages de tri (1, 2, 3) est commandée en fonction de l'évaluation, dans lequel après le passage d'un nombre prédéfini d'étages de tri (1, 2, 3) les articles triés (10) sont convoyés les uns derrière les autres sur un convoyeur de sortie commun (7), dans lequel avant le convoyage des articles (10) dans les étages de tri (1, 2, 3), les clés de tri (25, 26) sont déterminées par un procédé d'optimisation mis en œuvre par ordinateur en fonction du nombre d'articles (10) à trier et en fonction de l'algorithme de tri utilisé, **caractérisé en ce que** les clés de tri (25, 26) forment une suite numérique préservant l'ordre, qui s'écarte de la position cible séquentielle et qui, lors de l'exécution de l'algorithme de tri, conduit à la répartition équilibrée dans laquelle, dans chacun des étages de tri (1, 2, 3) pour toutes les voies de tri (1a, 2a, 3a), le nombre maximal d'articles (10) sur chaque voie de tri correspond à une limite supérieure prédéfinie et/ou le nombre minimal d'articles (10) sur chaque voie de tri (1a, 2a, 3a) correspond à une limite inférieure prédéfinie.

2. Procédé selon la revendication 1, comprenant les étapes suivantes :

    a) détermination du nombre total (K) d'articles (10) à trier ;
    b) détermination d'un ordre de tri souhaité des articles (10) sur la base de critères de tri ;
    c) calcul ou récupération d'un groupe optimisé de clés de tri (25, 26) depuis une mémoire de données, le nombre de clés de tri correspondant au nombre total (K) ;
    d) affectation des clés de tri optimisées (25, 26) aux articles (10) conformément à l'ordre de tri souhaité, l'affectation des clés de tri (25, 26) aux articles (10) étant effectuée par une application monotone dans laquelle l'ordonnancement des positions cibles souhaitées des articles correspond à l'ordonnancement des clés de tri affectées ;
    e) exécution du tri avec les clés de tri optimisées affectées (25, 26).

3. Procédé selon la revendication 1 ou 2, dans lequel la limite supérieure correspond à la valeur entière arrondie au supérieur résultant d'une division du nombre d'articles (10) à trier par le nombre de voies de tri (1a, 2a, 3a) d'un étage de tri (1, 2, 3), ou dans lequel la limite inférieure correspond à la valeur entière arrondie à l'inférieur résultant d'une division du nombre d'articles (10) à trier par le nombre de voies de tri (1a, 2a, 3a) d'un étage de tri (1, 2, 3).

4. Procédé selon l'une quelconque des revendications précédentes, dans lequel le nombre de voies de tri (1a, 2a, 3a) est identique dans tous les étages de tri (1, 2, 3).

5. Procédé selon l'une quelconque des revendications précédentes, dans lequel un algorithme de tri Radix est utilisé comme algorithme de tri.

6. Procédé selon l'une quelconque des revendications précédentes, dans lequel les étages de tri (1, 2, 3) sont réalisés sous la forme d'une pluralité de groupes de voies de tri (1a, 2a, 3a) disposés spatialement les uns derrière les autres, un convoyeur de regroupement (5, 6) étant disposé entre des étages de tri mutuellement adjacents dans chaque cas.

7. Procédé selon l'une quelconque des revendications 1 à 5, dans lequel plusieurs étages de tri sont formés par un seul groupe de voies de tri, lesquelles sont parcourues plusieurs fois en renvoyant les articles depuis le côté de sortie des voies de tri vers le convoyeur d'alimentation jusqu'à ce que le nombre prédéfini d'étages de tri ait été parcouru.

8. Procédé selon l'une quelconque des revendications précédentes, dans lequel les clés de tri (25, 26) pour chaque nombre d'articles à trier sont déterminées par une simulation mise en œuvre par ordinateur du tri avec exécution de l'algorithme et en fonction du nombre d'étages de tri (1, 2, 3) et de voies de tri (1a, 2a, 3a), dans lequel un ensemble de clés de tri (25, 26) parmi une pluralité d'ensembles de clés de tri est successivement soumis à la simulation et les ensembles de clés de tri (25, 26) qui conduisent à une répartition équilibrée des clés de tri (25, 26) sur les voies de tri (1a, 2a, 3a) dans tous les étages de tri (1, 2, 3) sont sélectionnés.

9. Procédé selon la revendication 8, dans lequel les ensembles sélectionnés de clés de tri (25, 26) de la simulation sont stockés en association avec le nombre d'articles (10), et au début d'une opération de tri les clés de tri (25, 26) sont récupérées depuis la mémoire de données en fonction du nombre d'articles.

10. Procédé selon la revendication 8 ou 9, comprenant les étapes suivantes :

    a) génération d'une pluralité de groupes candidats de clés de tri comprenant chacun K clés de tri, K correspondant au nombre d'articles à trier ;
    b) pour chaque groupe candidat de clés de tri : simulation de la séquence de tri complète à travers tous les étages de tri (1, 2, 3) par application de l'algorithme de tri déterministe ;
    c) évaluation quantitative de la répartition simulée des articles sur les voies de tri (1a, 2a, 3a) de tous les étages de tri (1, 2, 3) au moyen d'une mesure d'uniformité ;
    d) sélection du groupe candidat de clés de tri qui obtient la meilleure répartition équilibrée selon la mesure d'uniformité ; le procédé de simulation étant exécuté hors ligne et les groupes optimaux de clés de tri déterminés étant stockés dans une mémoire de données en association avec le nombre d'articles respectif K.

11. Procédé selon l'une quelconque des revendications précédentes, dans lequel l'algorithme de tri Radix est utilisé comme algorithme de tri et dans lequel les clés de tri (25, 26) sont formées dans un système de numération dont la base correspond au nombre de voies de tri (1a, 2a, 3a) et dont le nombre de positions de chiffres correspond au nombre d'étages de tri (1, 2, 3), les clés de tri (25, 26) étant formées de telle sorte qu'à chacune des positions de chiffres chaque chiffre apparaît avec une fréquence maximale correspondant à la limite supérieure prédéfinie et/ou avec une fréquence minimale correspondant à la limite inférieure prédéfinie.

12. Procédé selon la revendication 11, dans lequel les clés de tri (25, 26) pour un nombre donné K d'articles à trier sont générées par un processus de calcul algorithmique comprenant les étapes suivantes :

a) initialisation d'une liste de clés de tri pour un système de numération en base M à S positions de chiffres, M correspondant au nombre de voies de tri par étage de tri et S correspondant au nombre d'étages de tri ;
b) génération itérative de clés de tri par construction systématique de combinaisons de chiffres à l'aide d'une fonction d'optimisation de répartition équilibrée qui, de manière répétée : détermine, pour chaque position de chiffre (1 à S), la distribution de fréquence actuelle de tous les chiffres (0 à M-1) dans la liste de clés de tri déjà générée ; sélectionne, lors de la construction de chaque nouvelle clé de tri pour chaque position de chiffre, le chiffre présentant la fréquence actuelle la plus faible à cette position ; applique, lorsque plusieurs chiffres présentent la même fréquence la plus faible, une règle de sélection déterministe qui préfère le chiffre lexicographiquement le plus petit ou sélectionne un chiffre aléatoirement ; vérifie l'admissibilité de chaque combinaison de chiffres construite, une clé de tri étant considérée admissible si son ajout ne provoque pas qu'un chiffre à une quelconque position atteigne une fréquence supérieure à la valeur entière arrondie de la division de K par M ;
c) vérification de l'unicité de chaque clé de tri évaluée comme admissible par rapport à toutes les clés de tri déjà présentes dans la liste, les doublons entraînant la détermination de la prochaine combinaison de chiffres admissible par modification systématique de la sélection de chiffres tout en maintenant l'optimisation de répartition équilibrée ;

d) ajout de chaque clé de tri unique et admissible à la liste et poursuite de la génération itérative jusqu'à ce que la liste contienne K clés de tri.

13. Procédé selon l'une quelconque des revendications précédentes, dans lequel la limite supérieure prédéfinie est déterminée en fonction des dimensions de tous les articles (10) ou d'une sélection de ceux-ci.

14. Procédé selon l'une quelconque des revendications précédentes, dans lequel le nombre d'articles (10) convoyés sur le convoyeur d'alimentation (4) est prédéfini en fonction des dimensions de tous les articles (10) ou d'une sélection de ceux-ci.

Fig. 1a

Fig. 1b

Fig. 1c

Fig. 2a

Fig. 2b

Fig. 2c

Fig. 3

| 20 | | 25 | 26 |
|---|---|---|---|
| 1 | ⇨ | 000 | 0 |
| 2 | ⇨ | 005 | 5 |
| 3 | ⇨ | 014 | 10 |
| 4 | ⇨ | 111 | 43 |
| 5 | ⇨ | 113 | 45 |
| 6 | ⇨ | 130 | 54 |
| 7 | ⇨ | 205 | 77 |
| 8 | ⇨ | 222 | 86 |
| 9 | ⇨ | 250 | 102 |
| 10 | ⇨ | 333 | 129 |
| 11 | ⇨ | 344 | 136 |
| 12 | ⇨ | 351 | 139 |
| 13 | ⇨ | 422 | 158 |
| 14 | ⇨ | 431 | 163 |
| 15 | ⇨ | 444 | 172 |
| 16 | ⇨ | 522 | 194 |
| 17 | ⇨ | 543 | 207 |
| 18 | ⇨ | 555 | 215 |

Fig. 4

F1

555 431 333 543 205 444
222 111 351 014 000 422
005 113 130 522 250 344

10

4

5

6

| | 1a | | 2a | | 3a |
|---|---|---|---|---|---|
| 0 | 000 130 250 | | 205 005 000 | | 014 005 000 |
| 1 | 431 111 351 | | 014 113 111 | | 130 113 111 |
| 2 | 222 422 522 | | 222 422 522 | | 250 222 205 |
| 3 | 333 543 113 | | 333 431 130 | | 351 344 333 |
| 4 | 444 014 344 | | 444 344 543 | | 444 431 422 |
| 5 | 555 205 005 | | 555 351 250 | | 555 543 522 |

1

2

3

7

F2

000 005 014
111 113 130
205 222 250
333 344 351
422 431 444
522 543 555

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018209266 A1
- EP 3630655 A1
- US 2002053535 A1
- EP 3666690 A1
- US 2019039834 A1